# EUROPÄISCHE PATENTANMELDUNG

(11) **EP 2 263 853 A1**
(43) Veröffentlichungstag der Anmeldung: **22.12.2010**
(21) Anmeldenummer: 10006279.3
(22) Anmeldetag: 17.06.2010
(51) Int. Cl.: B29C 47/80, B29C 47/86, B29C 35/02, B29C 35/08, B29C 47/92

(54) **Extrusionsverfahren zur Herstellung und Verarbeitung von polymerhaltigen Materialien und Vorrichtung hierfür**

(30) Priorität: 18.06.2009 DE 102009029815
(71) Anmelder: Endres, Hans-Josef, Prof. Dr. Ing., 30890 Barsinghausen (DE)
(72) Erfinder: Endres, Hans-Josef, Prof. Dr. Ing., 30890 Barsinghausen (DE)
(74) Vertreter: Kröncke, Rolf

(57) **Zusammenfassung**

Die vorliegende Anmeldung betrifft ein Extrusionsverfahren zum Herstellen und Verarbeiten von polymerhaltigen Materialien unter Einwirken von Druckkraft und/oder Scherkraft, wobei dieses Verfahren das gleichzeitige Einwirken von Ultraschall und/oder Mikrowellen auf die zu verarbeitenden polymerhaltigen Materialien umfasst. Insbesondere betrifft dieses Verfahren ein Verarbeiten wie ein Aufschmelzen von polymerhaltigen Materialien enthaltend Thermoplast in Extrusionsverfahren. In einem weiteren Aspekt betrifft die vorliegende Anmeldung Vorrichtungen zur Durchführung des erfindungsgemäßen Verfahrens, wobei diese Vorrichtung Mittel (2) zur Zufuhr von polymerhaltigen Materialien, Mittel zur Ausübung von Druck und/oder Mittel zur Ausübung von Scherung und/oder Mittel (6) zur Temperatursteuerung sowie Mittel (5) zum Einbringen von Ultraschall und/oder Mikrowellen umfasst.

## Beschreibung

Die vorliegende Anmeldung betrifft ein Extrusionsverfahren zum Herstellen und Verarbeiten von polymerhaltigen Materialien unter Einwirken von mechanischen Kräften, wie Druckkraft und/oder Scherkraft, wobei dieses Verfahren das gleichzeitige Einwirken von Ultraschall und/oder Mikrowellen auf die zu verarbeitenden polymerhaltigen Materialien enthaltend Thermoplaste umfasst. Insbesondere betrifft dieses Verfahren ein Verarbeiten wie ein Aufschmelzen von polymerhaltigen Materialien in Extrusionsverfahren. In einem weiteren Aspekt betrifft die vorliegende Anmeldung Vorrichtungen zur Durchführung des erfindungsgemäßen Verfahrens, wobei diese Vorrichtung Mittel zur Zufuhr von polymerhaltigen Materialien, Mittel zur Ausübung von Druck und/oder Mittel zur Ausübung von Scherung und/oder Mittel zur Temperatursteuerung sowie Mittel zum Einbringen von Ultraschall und/oder Mikrowellen umfasst.

### Stand der Technik

Verfahren zur Herstellung und Verarbeitung von polymerhaltigen Materialien, insbesondere Aufschmelzen, Compoundieren und/oder Mischen von polymerhaltigen Materialien sind seit langem bekannt und werden in der Technik umfangreich eingesetzt. Typische Beispiele für solche Verfahren sind die Extrusion und das Spritzgießen. Die zugehörigen Vorrichtungen hierzu, wie Extruder oder Spritzgussmaschinen, besitzen ein verfahrens- und werkstoffangepassten Aufbau. Insbesondere in solchen Vorrichtungen stellt das Verarbeiten von polymerhaltigen Materialien eine Herausforderung dar. Insbesondere beim Aufschmelzen von polymerhaltigen Materialien mit stark intermolekularen Wechselwirkungen oder bei Kompositen oder bei Polymerblends stellt das gleichmäßige, bevorzugt homogene Aufschmelzen der polymerhaltigen Materialien eine Herausforderung dar und ist teilweise nur unter größeren Schwierigkeiten oder überhaupt nicht möglich.

So können polymerhaltige Materialien, mit starken zwischenmolekularen Wechselwirkungen durch das Aufschmelzen zerstört werden. Beispielhaft sei hier der Einsatz von Cellulose genannt. Cellulose schmilzt nicht, sondern baut sich unter Einwirkung Wärme ab einer Temperatur von ca. 180 °C ab. Auch bei anderen Naturstoffen, z. B. Naturfasern oder Holzmehl zur Herstellung von Verbundwerkstoffen auf Polymerbasis, weisen diese Naturfasern oder Holzmehle eine geringe thermische Belastbarkeit auf, d. h. es findet bei Erwärmung relativ rasch eine irreversible Veränderung der Materialien statt.

Entsprechend schwierig ist es Verbundwerkstoffe, die natürliche Polymere, wie Polysaccharide, z. B. Chitin oder Cellulose enthalten, aber auch ein Verstärkungsmittel, wie Naturfasern oder Holzmehl, zu extrudieren.

Es wurden verschiedene Ansatzpunkte zur Lösung dieser Probleme vorgeschlagen. So soll eine chemische Modifikation z. B. von Cellulose zu Cellulosenitrat, Celluloseacetat etc. die Verarbeitung verbessern. Des Weiteren werden Zusatzstoffe den Kompositmatierialien zugeführt, um deren Verarbeitbarkeit zu fördern.

Ungelöst bleibt aber die thermische Labilität der Polymere und/oder der weiteren Bestandteile von Kompositen.

Auch das Einbringen von Füllstoffen z. B. in Thermoplasten erfordert ein Aufschmelzen der Thermoplaste um eine gleichmäßige Verteilung der Füllstoffe zu gewährleisten. Übliche Füllstoffe sind anorganische Füllstoffe, z. B. gemahlenes oder gefälltes Kalziumcarbonat, Talkum oder Schichtsilikate. Diese haben auch Einfluss auf die mechanischen Eigenschaften der polymeren Werkstoffe. Üblicherweise werden solche Füllstoffe zu Thermoplasten in einem Extruder zugegeben.

Die DE 102 60 137 A1 schlägt zur Lösung des Problems einer thermischen irreversiblen Veränderung von Bestandteilen polymerhaltiger Materialien den Einsatz von elektromagnetischer Strahlung mit einem Wellenbereich von 0,8 µm bis 100 µm vor. Diese soll z. B. stark intermodukulare Wechselwirkungen derart verändern, dass die Materialien aufgeschmolzen bzw. plastisch verformt werden können. Ein solches Verfahren sei insbesondere bei Cellulose und Chitin enthaltenen Materialien vorteilhaft. Das dort beschriebene Verfahren umfasst das gleichzeitige Einwirken von Druck und Scherung sowie thermischer Energie im Zusammenhang mit dem weiteren Einwirken von elektromagnetischer Strahlung mit einem Wellenbereich von 0,8 µm bis 100 µm auf das Polymer, um eine Verformung zu erlauben. Insbesondere beschreibt diese Anmeldung ein Verfahren, bei dem ein Laser eingesetzt wird. Es wird des Weiteren eine Vorrichtung zur Durchführung des beschriebenen Verfahrens beansprucht.

Ein Nachteil dieses dort beschrieben Verfahrens ist allerdings der komplexe Aufbau zum Einbringen der elektromagnetischen Strahlung und die damit verbundenen hohen Kosten. Des Weiteren erfordert das beschriebene Verfahren und die beschrieben Vorrichtung bei der z. B. ein Laser eingesetzt wird, dass die Energiequelle unmittelbar mit dem Polymer in Kontakt kommt. Eine externe Einstrahlung der elektromagnetischen Strahlung des Lasers ist schwierig, insbesondere bei herkömmlich verwendeten Extrusionsvorrichtungen und Stützgusseinrichtungen.

Aus der EP 1 590 159 ist ein Verfahren und eine Vorrichtung zur Herstellung von medizinischen Geräten unter Einsatz von Mikrowellenenergie bekannt. Bei diesem Verfahren, bei dem Polymere mit Hilfe eines Stempels durch die Düse gepresst werden, wird ohne weitere mechanische Energieeinleitung Mikrowellenenergie im Bereich der Düse eingestrahlt, um das Fließverhalten zu verbessern und den geschmolzenen Zustand des Polymers aufrecht zu erhalten.

Aus der DE 198 30 296 ist ein Verfahren und eine Vorrichtung zur Beeinflussung des Fliesverhaltens von Elastomermassen bekannt. Hierbei wird die Elastomermasse mit hochfrequenter Schwingung ohne weitere Energieeinleitung insbesondere im Düsenbereich beaufschlagt, um das Fließverhalten im Düsenbereich zu verbessern.

Der vorliegenden Erfindung liegt die Aufgabe zu Grunde, Verfahren bereitzustellen, die eine Verbesserung der Herstellung und der Verarbeitung von polymerhaltigen Materialien erlauben, insbesondere ein Aufschmelzen und Compoundieren von polymerhaltigen Materialien, wie Verbundwerkstoffen ermöglicht, ohne das Material irreversibel zu schädigen. Dieses Verfahren soll insbesondere ermöglichen, gegebenenfalls lokal begrenzt und bevorzugt mit vorbestimmten Frequenzbändern und sich daraus ergebenen Energien, ein Verarbeiten des polymerhaltigen Materials zu erlauben, zu optimieren oder energetisch effizienter zu gestalten. Diese Verfahren sollen sich des Weiteren darin auszeichnen, dass diese möglichst ökonomisch und einfach mit herkömmlichen Vorrichtungen durchgeführt werden können.

Eine weitere Aufgabe der vorliegenden Erfindung ist die Bereitstellung von Vorrichtungen geeignet zur Durchführung dieser Verfahren zum Verarbeiten von polymerhaltigen Materialien, wie zum Aufschmelzen von Polymeren und Verbundwerkstoffen zur Weiterbearbeitung durch Extrusion.

### Zusammenfassung der Erfindung

Diese Aufgaben werden durch ein Verfahren und Vorrichtungen gemäß den Ansprüchen gelöst. D. h., in einem ersten Aspekt richtet sich die vorliegende Erfindung auf ein Extrusionsverfahren zum Herstellen und Verarbeiten von polymerhaltigen Materialien umfassend das Einwirken von mechanischen Kräften, insbesondere von Druckkraft oder Scherkraft und/oder Temperatur auf diese polymerhaltigen Materialien, **dadurch gekennzeichnet, dass** gleichzeitig mit den mechanischen Kräften Ultraschall und/oder Mikrowellen auf die zu verarbeitenden polymerhaltigen Materialien enthaltend Thermoplaste einwirkt.

In einem zweiten Aspekt richtet sich die vorliegende Erfindung auf eine Vorrichtung zur Durchführung des erfindungsgemäßen Extrusionsverfahrens zur Herstellung und/oder Verarbeitung von polymerhaltigen Materialien, wobei diese Mittel zur Aufnahme eines polymerhaltigen Materials, Mittel zur Ausübung von mechanischen Kräften, wie Mittel zur Ausübung von Druck auf das polymerhaltige Material, Mittel zur Ausübung von Scherung auf das polymerhaltige Material und/oder Mittel zur Temperatursteuerung und Mittel zur Einwirkung von Ultraschall und/oder Mikrowellen auf das polymerhaltige Material, umfasst.

### Kurze Beschreibung der Abbildungen

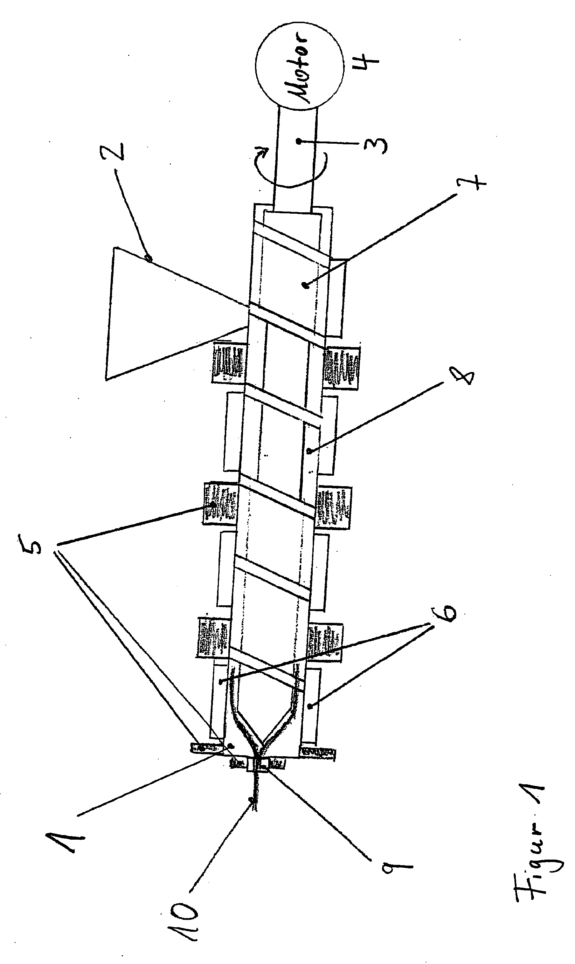

Figur 1 zeigt beispielhaft eine erfindungsgemäße Vorrichtung zur Durchführung des erfindungsgemäßen Verfahrens.

### Ausführliche Beschreibung der Erfindung

In einem ersten Aspekt richtet sich die vorliegende Erfindung auf ein Extrusionsverfahren zum Herstellen und Verarbeiten von polymerhaltigen Materialien, wobei das polymerhaltige Material eines mit einem Thermoplast, einem thermoplastischen Biopolymer, oder Komposit mit solchen Thermoplasten ist unter Einwirkung von mechanischen Kräften, wie Druckkraft und/oder Scherkraft, und/oder Temperatur auf diese polymerhaltigen Materialien, **dadurch gekennzeichnet, dass** gleichzeitig mit den mechanischen Kräften Ultraschall und/oder Mikrowellen auf das zu verarbeitende polymerhaltige Material einwirkt.

Unter dem Ausdruck "polymerhaltiges Material" wird vorliegend ein thermoplastisches Material verstanden, das ein natürliches oder synthetisches Polymer beinhaltet. Das polymerhaltige Material ist eins mit einem Thermoplast, z. B. ein Komposit mit einem solchen Thermoplast. Bei dem polymerhaltigen Material kann es sich dabei um ein reines Polymer handeln, eine Polymermischung aus verschiedenen Polymeren, wie Polymermischungen aus synthetischen und natürlichen Polymeren, oder Verbundwerkstoffe bzw. Komposite, die als eine Komponente Polymere enthalten. Die Polymere können ggf. chemisch modifiziert sein, wie im Stand der Technik bekannt. Bei dem polymerhaltigen Material handelt es sich bevorzugt um Eines, das Cellulose und/oder Chitin als natürliche Polymere, nämlich natürliche Polysaccharide, enthält.

Dabei bevorzugte Polymere, die mit dem erfindungsgemäßen Verfahren verarbeitet werden, schließen üblicherweise extrusionstechnisch nicht oder schwer verarbeitbare Materialien ein, wie PVC, Polyvinylalkohol, Polyester sowie schwer schmelzbare Kunststoffe wie PEEK, PES, PEE, PPE, PI, PA, Biopolymere z. B. auf Polysacchardbasis, Polyhydroxyalkanoate, Polylactide.

In einem weiteren Aspekt handelt es sich bei den polymerhaltigen Materialien um Polymerblends bzw. mehrphasige Werkstoffe, wie Verbundwerkstoffe bzw. Komposite. Bei diesen Verbundmaterialien kann es sich z. B. um solche handeln, die durch Zugabe von natürlichen oder synthetischen Fasern verstärkte Polymere sind oder z. B. mit Holzmehl gefüllte Kunststoffe. Alternativ kann es sich bei den Verbundwerkstoffen auch um solche handeln, in denen andere organische oder anorganische Füllmittel vorliegen.

Bei den polymerhaltigen Materialien handelt es sich bei der Polymerkomponente um Thermoplaste, einschließlich thermoplastische Biopolymere.

Unter "Einwirkung von Temperatur" wird vorliegend ein Einwirken von Wärme verstanden. Wärme wird z. B. mit einem Heizblock oder entsprechenden Heizelementen erreicht.

"Einwirkung von mechanischen Kräften" schließt vorliegend insbesondere Druck- und Scherkräfte ein. Drückkräfte können sowohl eine Druckerhöhung als auch eine Druckerniedrigung sein.

Mit Hilfe des erfindungsgemäßen Verfahrens ist es möglich, die thermische Belastung von Inhaltsstoffen der polymerhaltigen Materialien zu verringern. So sind z. B. natürliche Polysaccharide, wie Cellulose oder Chitin thermisch labil und eine thermische Belastung dieser Stoffe zur thermoplastischen Verarbeitung führt schnell zu irreversiblen Schäden.

Mit Hilfe des erfindungsgemäßen Verfahrens ist es möglich bei Polymerblends oder Verbundwerkstoffen ein selektives Aufschmelzen zu erreichen, z. B. das Aufschmelzen der polymerbasierten Matrix bei minimaler thermischer Belastung der weiteren Komponenten des Polymerblends, bzw. der mehrphasigen Werkstoffe, wie des Verbundwerkstoffes bzw. Komposite z. B. minimaler Belastung von Fasern bei naturfaserverstärkten oder holzmehlgefüllten Kunststoffen.

Ebenso kann mit Hilfe des erfindungsgemäßen Verfahrens Energie in polymere Werkstoffe, d. h. in Thermoplaste, insbesondere auch Biopolymere, zur Vernetzung, zur chemischen Modifizierung oder zum Schäumen der Moleküle insbesondere aber zum Aufschmelzen der polymerhaltigen Materialien gezielt Energie eingekoppelt werden.

Das Einwirken von Ultraschall und/oder Mikrowellen erlaubt ein gezieltes Einbringen von Energie, z. B. durch Auswahl des Frequenzbandes oder der Amplitude, in die polymerhaltigen Materialien, um diese weiter zu verarbeiten bzw. herzustellen. Unter dem Ausdruck Verarbeiten bzw. Herstellen wird dabei insbesondere ein Aufschmelzen, Compoundieren oder Mischen verstanden.

Erfindungsgemäß ist das Verarbeiten des polymerhaltigen Materials gemäß der vorliegenden Erfindung ein Verfahren, das Teil eines Extrusionsverfahrens ist. Ultraschallwellen und Mikrowellen (1 mm bis 100 mm) zeichnen sich insbesondere dadurch aus, dass sie im Gegensatz zu z. B. elektromagnetischen Wellen eines Lasers auch durch Materialen übertragen werden können. D. h., diese Wellen können z. B. durch das Gehäuse der Vorrichtung geleitet werden.

In Extrusionsverfahren werden üblicherweise die zur Bearbeitung der polymerhaltigen Materialien erforderliche Energie, z. B. zum Aufschmelzen der Polymere, neben der mechanischen Energie, z. B. durch Antriebsleistung der Extruderschnecken durch zusätzliche Wärme durch Heizelemente in die Masse eingebracht.

Dieses hat allerdings den Nachteil, dass die notwendige Wärme bzw. Energie nicht ausreichend eingebracht werden kann, um alle polymerhaltigen Materialien zu verarbeiten bzw. das Einbringen kann nicht gezielt und definiert erfolgen, da z. B. die Heizelemente zu träge sind. Mit Hilfe des erfindungsgemäßen Verfahrens unter Einsatz von Ultraschall und/oder Mikrowellen ist es hingegen möglich, den Prozess entsprechend durch gezieltes ggf. lokal begrenztes und/oder zeitlich begrenztes Einbringen von Energie ggf. auf einem bestimmten Energieniveau zu führen. Eine solche geregelte bzw. gesteuerte Energieeintreibung ist bei konventioneller Prozessführung nur sehr begrenzt möglich. Mittels der üblichen Heizelemente wird die Energie über größere Bereiche eingebracht und häufig muss sogar zu genaueren Regelung parallel gegengekühlt werden.

In einer Ausführungsform des erfindungsgemäßen Verfahrens kann aber eine Grunderwärmung durch bekannte Heizelemente bzw. Kühlelemente erfolgen, d. h. das Verfahren kann weiterhin zumindest teilweise die Zuführung von Wärme bzw. das Abführen von Wärme umfassen.

Mit Hilfe der mechanischen Kräfte, wie Druckkraft und/oder Scherkraft z. B. durch die Extruderschnecke und den Heizelementen angeordnet in dem Extruder wird eine notwendige Grundenergie in das System gebracht. Erfindungsgemäß kann dann mit Hilfe des Ultraschalls und/oder Mikrowellen ein gezieltes Einbringen von Energie zur besseren Prozessführung erfolgen. Dadurch ist es möglich schonend die polymerhaltigen Materialien in einen verarbeitbaren Zustand zu bringen, z. B. Aufzuschmelzen, Compoundieren und/oder Mischen ohne Komponenten der polymerhaltigen Materialien thermisch zu stark zu belasten und so zu irreversiblen Schädigungen zu führen.

Bevorzugt wird das Einbringen bzw. Einwirken von Ultraschall und/oder Mikrowellen auf die polymerhaltigen Materialien zum Aufschmelzen dieser genutzt. Daher erfolgt in einer bevorzugten Ausführungsform des erfindungsgemäßen Verfahrens das Einbringen des Ultraschalls und/oder Mikrowellen in die Aufschmelzzone der Vorrichtung zur Durchführung des erfindungsgemäßen Verfahrens.

Mit Hilfe des erfindungsgemäßen Verfahrens ist es möglich Energie gezielt auf einem oder mehreren verschiedenen Energieniveaus in das polymerhaltige Material einzubringen, um so ein selektives oder gezieltes Aufschmelzen oder Vernetzen der Bindungen, insbesondere der intermolekularen Bindungen zwischen den Polymeren mit ihren jeweiligen Bindungsenergien, zu ermöglichen. Dabei wird das durch den Ultraschall und/oder Mikrowellen eingebrachte Energieniveau exakt auf die jeweiligen Bindungsenergien der intermolekularen Bindungen in den Polymeren eingestellt, z. B. durch Auswahl des Frequenzbandes oder der Amplitude. Dadurch ist es möglich die als Nebenvalenzen bezeichneten Bindungen zu lösen und somit ein Verformen der polymerhaltigen Materialien auf Grund eines Aufschmelzens dieser, zu erlauben. Außerdem kann auch eine gezielte Vernetzung auf effizientere Weise erfolgen

Das erfindungsgemäße Verfahren erlaubt ein gezieltes bzw. sequenzielles Aufschmelzen verschiedener Polymerbestandteile. Dadurch ist der Einsatz auch von thermisch labilen Komponenten in Extrusionsverfahren möglich, da die thermische Belastung minimiert ist. Andererseits ermöglicht das erfindungsgemäße Verfahren die Verwendung von bisher schwer zugänglichen polymerhaltigen Materialien in Extrusionsverfahren.

Das erfindungsgemäße Verfahren erlaubt materialschonenderes Aufschmelzen, Mischen oder Compoundieren zur Verarbeitung und Herstellung von polymerhaltigen Materialien. Durch die genauere Temperaturführung durch Einsatz von Ultraschall und/oder Mikrowellen ist eine lokal begrenzte und/oder zeitlich begrenzte Einbringung von Energie in die Materialien möglich. Eine genauere Regelung und Steuerung des Einbringens von Energie ist dadurch möglich.

Das erfindungsgemäße Verfahren ist durch diese bessere Prozessführung und die spezifische, sehr gut kontrollierbaren und regelbare Energieeinkopplung anstelle einer bisher verwendeten nur unspezifischen Einbringung von Heizenergie effizienter, wirtschaftlicher und umweltschonender.

Mit Hilfe des Ultraschalls und/oder Mikrowellen können in den Bereichen, in denen zusätzlich das Einbringen von Energie erforderlich ist, d. h. lokal begrenzt und/oder zeitlich begrenzt Energie auf einem bestimmten Niveau erzeugt werden. Solche Bereiche sind z. B. die Aufschmelzbereiche von Extrudern. Gleiches gilt für Bereiche in denen Komponenten, wie Füllstoffe zu den Polymeren zum homogenen Vermischen zugeführt werden.

Der zusätzliche Energieeintrag erlaubt die Durchsatzleistung in den Verfahren zu erhöhen bzw. kann eine Vorrichtung bei gleicher Leistung gegenüber der konventionellen Ausführung kleiner, kompakter und damit preiswerter ausgeführt werden bzw. die Effizienz der Energieeintragung erhöhen und damit den Energieverbrauch verringern.

Dieses Verfahren ist auch auf andere Bereiche der Herstellung und Verarbeitung von polymerhaltigen Materialien übertragbar, z. B. in Bereichen der Thermoplastüberarbeitung usw.

In einer bevorzugten Ausführungsform umfasst das Verfahren des Weiteren das Aufschmelzen der polymerhaltigen Materialien und anschließend das Extrudieren zu Folien oder Fasern.

In einem weiteren Aspekt richtet sich die vorliegende Erfindung auf eine Vorrichtung zur Durchführung des erfindungsgemäßen Extrusionsverfahrens. Diese Vorrichtung ist **dadurch gekennzeichnet, dass** sie Mittel zur Aufnahme der polymerhaltigen Materialien, Mittel zur Ausübung mechanischer Kräfte, wie zur Ausübung von Druck auf die polymerhaltigen Materialien und/oder zur Ausübung von Scherung auf die polymerhaltigen Materialien, und/oder Mittel zur Temperatursteuerung sowie Mittel zur gleichzeitigen Einstrahlung von Ultraschall und/oder Mikrowellen umfasst.

In einer bevorzugten Ausführungsform umfasst diese Vorrichtung des Weiteren ein Mittel zum Zuführen oder Abführen von Wärme, wie z. B. Heizelemente und Kühlelemente. Weiter bevorzugt umfasst die Vorrichtung zur Durchführung des Verfahrens Mittel zum Extrudieren von z. B. Folien oder Fasern.

In einer bevorzugten Ausführungsform sind die erfindungsgemäßen Vorrichtungen somit Extrudermaschinen.

Wenn es sich bei der erfindungsgemäßen Vorrichtung um eine Extrudermaschine handelt, so kann das Mittel zur Ausübung von mechanischen Kräften, wie zur Ausübung von Druck und/oder zur Ausübung von Scherung und ggf. das Mittel zum Zuführen von Wärme oder mehrere eine entsprechend ausgebildete Extruderschnecken sein. Bevorzugt handelt es sich bei den Mitteln zur Ausübung von Druck, zur Ausübung von Scherung und zur Zuführung von Wärme zum polymerhaltigen Material um eine oder mehrere, gegebenenfalls beheizbare Extruderschnecken und die umgebenden Verfahrensteile wie Extrudergehäuse, Werkzeuge, etc.

In einer bevorzugten Ausführungsform ist die Vorrichtung derart ausgestaltet, dass das Mittel zum Einbringen von Ultraschall und/oder Mikrowellen ggf. verschiebbar eine lokal begrenzte Einbringung von Ultraschall und/oder Mikrowellen erlaubt. Unter verschiebbar wird verstanden, dass das Mittel zum Einbringen von Ultraschall und/oder Mikrowellen über die Länge des Extruders lokal verschiebbar ist. Dieses erlaubt eine bessere Prozessführung. Sollte z. B. im Rahmen der Prozessüberwachung festgestellt werden, dass lokal Energie zum Aufschmelzen des polymerhaltigen Materials benötigt wird, kann einfach durch Verschieben des Mittels zum Einbringen von Ultraschall und/oder Mikrowellen an eine entsprechende Position diese Energie lokal und zeitlich begrenzt eingebracht werden. Hierdurch ist eine bessere und genauere Prozessführung durch Regulierung und Kontrolle von eingebrachtem Ultraschall und/oder Mikrowellen möglich.

Der Ultraschall und/oder die Mikrowellen selbst kann/können entsprechend den Erfordernissen durch ein entsprechendes Frequenzband bzw. Einstellung der Amplitude eingestellt sein, um den Erfordernissen zum Aufschmelzen der Polymerkomponente im polymerhaltigen Material zu genügen. Dadurch ist es möglich entsprechende "Energieniveaus" lokal in das Material einzubringen.

Bevorzugt sind die Mittel zum Einbringen von Ultraschall und/oder Mikrowellen außerhalb der Gehäusevorrichtung angeordnet. Dadurch kann der Ultraschall und/oder Mikrowellenerzeuger an beliebiger Stelle der Vorrichtung angeordnet sein, z. B. in der Aufschmelzzone am Gehäuse des Extruders zur lokalen Energieeinkopplung. Dies erlaubt auch ein einfaches Verschieben über die Länge der Vorrichtung. Insbesondere bietet der Ultraschall und/oder Mikrowellen den Vorteil, dass es keinen unmittelbaren Kontakt zwischen Kunststoffschmelze und Energiequelle erfordert, vielmehr ist auch eine Übertragung über die z. B. metallischen Maschinengehäuse/Werkzeuge möglich. Alternativ kann die Energieübertragung über entsprechende Ausschnitte, z. B. Fenster, erfolgen. Dadurch bleibt das Polymer z. B. abgeschirmt vor Umgebungseinflüssen wie Sauerstoff oder Feuchtigkeit oder kann unter hohem Druck und Temperatur gehalten werden. Dieses erlaubt dann eine höhere Bearbeitungsgeschwindigkeit bzw. Kapazität der Vorrichtungen und hat somit ökonomische Vorteile.

Durch permanente oder zeitlich begrenzte Einwirkung von Ultraschall und/oder Mikrowellen ist ein gleichmäßigeres Aufschmelzen, Compoundieren und/oder Mischen von polymerhaltigen Materialien möglich. Die Temperaturführung ist besser regulierbar und die thermische Belastung der Komponenten der polymerhaltigen Materialien wird dadurch minimiert.

Des Weiteren kann hierdurch auch parallel zum Aufschmelzen, Compoundieren und/oder Mischen auch eine Materialtrocknung, eine chemische Modifizierung oder ein Entgasung erfolgen.

Unter Bezugnahme auf die Figur 1 wird die erfindungsgemäße Vorrichtung näher erläutert.

Die erfindungsgemäße Vorrichtung umfasst ein Extruder 1 mit einem Mittel zur Aufnahme von polymerhaltigem Material enthaltend Thermoplast, ein Mittel zur Zufuhr von polymerhaltigem Material 2 über die das polymerhaltige Material dem Extruder zugeführt wird. Das polymerhaltige Material wird dann z. B. mit Hilfe einer Extruderschnecke 7 mit den Mitteln 3 und 4 in Richtung der Auslauföffnung 9, z. B. eine Düse, transportiert. Mit dem ggf. verschiebbaren Mittel zum Einbringen von Ultraschall und/oder Mikrowellen 5 ist es möglich zusätzliche Energie zum Verarbeiten des polymerhaltigen Materials in den Extruder einzubringen. Ggf. sind weitere Mittel zum Zuführen oder Abführen von Wärme oder Mittel zur Kühlung zur Temperatursteuerung 6 an dem Extruder angeordnet. Wenn notwendig können weitere geeignete Einrichtungen z. B. zum Abführen von gasförmigen Bestandteilen oder Einrichtungen zur Zufuhr von weiteren Komponenten des polymerhaltigen Materials, z. B. Füllstoffe, Fasern etc., an dem Extruder angeordnet sein. In einer bevorzugten Form sind Mittel zum Zuführen von Wärme 6 die umgebenden Verfahrensteile wie Extrudergehäuse und/oder die Extruderschnecke oder Extruderschnecken 7. Der beheizbare Bereich der Vorrichtung kann sich über den gesamten Extruder erstrecken oder, alternativ, kann der beheizbare Bereich in verschiedenen Abschnitten des Extruders angeordnet sein. Das vorhandene Mittel zum Ausüben von Druck und/oder Ausüben von Scherung ist bevorzugt die Extruderschnecke 7, die als Einzel- oder Doppelschnecke vorliegen kann. Diese Schnecke führt das verformbare, verarbeitbare polymerhaltige Material in Richtung der Auslauföffnung 9. Die Auslassöffnung 9, üblicherweise eine Düse, explodiert das zu verarbeitende aufgeschmolzene polymerhaltige Material zu Extrudat 10.

Das Extrudat kann dann durch bekannte Verfahren weiterbearbeitet werden, z. B. in ein Spritzgussverfahren oder der Folien- oder Faserherstellung eingesetzt werden.

### Bezugszeichen

- 1: Extruder
- 2: Mittel zum Zuführen von polymerhaltigem Material
- 3: Mittel zum Ausüben von Druck
- 4: Mittel zum Ausüben von Scherung
- 5: Mittel zum Einbringen von Ultraschall und/oder Mikrowellen
- 6: Mittel zum Zuführen und/oder Abführen von Wärme
- 7: Extruderschnecke
- 8: Aufschmelzzone
- 9: Auslassöffnung
- 10: Extrudat

## Patentansprüche

1. Extrusionsverfahren zum Herstellen und Verarbeiten von polymerhaltigen Materialien, umfassend das Einwirken von mechanischen Kräften auf diese Materialien, wobei das polymerhaltige Material eines mit einem Thermoplast, insbesondere einem thermoplastischen Biopolymer, oder Komposit mit solchen Thermoplasten ist, **dadurch gekennzeichnet, daß** gleichzeitig mit den mechanischen Kräften Ultraschall und/oder Mikrowellen auf die zu verarbeitenden polymerhaltigen Materialien einwirken.

2. Verfahren nach Anspruch 1, **dadurch gekennzeichnet, daß** das Verarbeiten ein Aufschmelzen, Compoundieren oder Mischen des Thermoplasthaltigen polymeren Materials ist.

3. Verfahren nach Anspruch 1 oder 2, **dadurch gekennzeichnet, daß** während des Einwirkens von Ultraschall und/oder Mikrowellen zumindest teilweise den polymerhaltigen Materialien Wärme zugeführt und/oder Wärme von den polymerhaltigen Materialien abgeführt wird.

4. Verfahren nach einem der Ansprüche 1 bis 3, **dadurch gekennzeichnet, dass** der Ultraschall und/oder Mikrowellen lokal begrenzt und/oder zeitlich begrenzt und/oder ggf. auf bestimmten Energieniveaus ggf. gleichzeitig mit der thermischen und/oder mechanischen Energie des polymerhaltigen Materialien zugeführt wird.

5. Verfahren nach einem der Ansprüche 1 bis 4, wobei das Verfahren ein Verfahren zum Aufschmelzen von polymerhaltigen Materialien ist und Ultraschall und/oder Mikrowellen in der Aufschmelzzone der Vorrichtung zur Durchführung des Verfahrens eingebracht wird und/oder das Verfahren ein Verfahren zum Aufschmelzen von polymerhaltigen Materialien ist und Ultraschall und/oder Mikrowellen im Compoundierbereich der Vorrichtung zur Durchführung des Verfahrens eingebracht wird.

6. Verfahren nach einem der vorherigen Ansprüche, **dadurch gekennzeichnet, dass** das Einwirken mechanischer Kräfte eines von Druckkraft und/oder Scherkraft ist.

7. Verfahren nach einem der Ansprüche 1 bis 6, **dadurch gekennzeichnet, dass** die polymerhaltigen Materialien aufgeschmolzen und anschließend granuliert oder zu Folien, Profilen oder sonstigen Halbzeugen extrudiert werden.

8. Verfahren nach einem der Ansprüche 1 bis 7, wobei die Thermoplasten ausgewählt sind aus PVC, Polyvinylalkohol, Cellulose, Stärke oder sonstigen Polysacchariden, Polyester, schwer schmelzbare Kunststoffe, insbesondere PEEK, PES, PEK, PPE, PI, PA, thermoplastische Biopolymere z. B. auf Polysaccharidbasis, wie Stärke oder Cellulose, Polyhydroxyalkanoate oder Polylactide.

9. Verfahren nach einem der Ansprüche 1 bis 8, wobei die polymerhaltigen Materialien mehrphasige Werkstoffe wie ein Verbundwerkstoff ist, insbesondere ein Verbundwerkstoff von naturfaserverstärkten oder holzmehlgefüllten Kunststoffen.

10. Vorrichtung zur Durchführung des Extrudionsverfahrens nach einem der Ansprüche 1 bis 9, **dadurch gekennzeichnet, dass** diese Mittel zur Aufnahme der polymerhaltigen Materialien, Mittel zur Ausübung von Druck auf die polymerhaltigen Materialien und/oder Mittel zur Ausübung von Scherung auf die polymerhaltigen Materialien und Mittel zur Einstrahlung von Ultraschall und/oder Mikrowellen umfasst.

11. Vorrichtung nach Anspruch 10 weiterhin umfassend Mittel zum Zuführen oder Abführen von Wärme.

12. Vorrichtung nach einem der Ansprüche 10 oder 11 weiterhin umfassend Mittel zum Extrudieren von Granulaten, Folien, Fasern, Profilen oder anderen Halbzeugen.

13. Vorrichtung nach einem der Ansprüche 10 bis 12 wobei das Mittel zur Ausübung von Druck auf die polymerhaltigen Materialien, das Mittel zur Ausübung von Scherung auf die polymerhaltigen Materialien und das Mittel zum Zuführen von Wärme beheizbare Gehäuse, Gehäuseelemente, Düsen, Werkzeuge eine oder mehrere beheizbare Extruderschnecken sind.

14. Vorrichtung nach einem der Ansprüche 10 bis 13, wobei das Mittel zum Einbringen von Ultraschall und/oder Mikrowellen verschiebbar zur lokal begrenzten Einbringung von Ultraschall und/oder Mikrowellen ausgestaltet ist und/oder wobei das Mittel zum Einbringen von Ultraschall und/oder Mikrowellen außerhalb der Gehäusevorrichtung angeordnet ist.

15. Vorrichtung nach einem der Ansprüche 10 bis 14 wobei das Mittel zum Einbringen von Ultraschall und/oder Mikrowellen derart ausgestaltet ist, dass der Ultraschall und/oder Mikrowellen permanent oder zeitlich und/oder lokal begrenzt und unter Änderung des Frequenzbandes und/oder der Amplitude auf bestimmten Energieniveaus eingebracht werden kann.
